# EUROPEAN PATENT SPECIFICATION

(11) **EP 2 781 999 B1**
(45) Date of publication and mention of the grant of the patent: **10.10.2018**
(21) Application number: 14160233.4
(22) Date of filing: 17.03.2014
(51) Int. Cl.: G06F 3/0485, G06F 3/0488, G06F 15/02, G06F 3/0486

(54) **Graph display apparatus with scroll controll unit, and corresponding method and storage medium**
Graphikanzeigevorrichtung mit Scrollkontrolleinheit, sowie entsprechendes Verfahren und Speichermedium
Appareil d'affichage de graphique avec unité de défilement, ainsi que procédé et support de stockage correspondants

(30) Priority: 19.03.2013 JP 2013055832
(43) Date of publication of application: 24.09.2014
(73) Proprietor: CASIO COMPUTER CO., LTD., Shibuya-ku, Tokyo 151-8543 (JP)
(72) Inventor: Uejima, Hiroshi, Hamura-shi, Tokyo 205-8555 (JP)
(74) Representative: Grünecker Patent- und Rechtsanwälte PartG mbB

(56) References cited:
- EP-A1- 2 131 288
- EP-A1- 2 579 144
- EP-A2- 2 302 493
- JP-A- 2000 250 498
- JP-A- 2003 150 562
- US-A1- 2008 068 403
- US-A1- 2010 251 166
- US-A1- 2011 252 362
- US-A1- 2012 005 623

## Description

The present invention relates to a graph display apparatus, a graph display method and a storage medium having stored thereon a graph display program.

A conventional information display apparatus, which displays information such as images and texts, scrolls the display content with momentum (inertia) according to a user operation.

By the way, when the display content is momentum-scrolled, the amount of the momentum-scrolling may be larger or smaller than the amount thereof which a user intends to make.

Hence, a recent information display apparatus, which displays information such as images and texts and momentum-scrolls the display content, detects a certain image from images which could be displayed by the momentum-scrolling and stops the momentum-scrolling at a time when the detected image is displayed at a predetermined position, which is described, for example, in Japanese Patent Application Laid-Open Publication No. 2008-77183 (Patent Document 1).

Further, an information display apparatus, which displays headwords of a dictionary database in a list form in order of prefix-matching an input character string and scrolls the display content, temporarily slows down the scroll speed at a time when a letter immediately after the input character string is switched to another, which is described, for example, in Japanese Patent Application Laid-Open Publication No. 2007-94987 (Patent Document 2) . More specifically, with the art described in Patent Document 2, for example, when a character string "bea" is input, headwords which prefix-match the input character string are displayed in a list form, and when the display content is scrolled, headwords "beach", "beacon", ... (headwords having "c" immediately after the input character string "bea") are displayed, and then the scroll speed temporarily decreases at a time when a headword "head" (a headword having "d" immediately after the input character string "bea") is displayed.
US 2011/252362 A1 discloses, e.g., a mobile phone with a touch screen display. In order to make the finding of items easier, a scroll limit can be set where the scroll velocity slows down or scrolling is stopped. The item/scroll limit can be a word or an image, wherein the item is either preset or is set by a user.
JP 2003-150562 relates to the display of function expressions in a graphical manner. In order to enable a user to see at least one main part of the graphic representation of the function expression on the screen, an automatic or manual adjustment of the coordinate system is provided.
EP 2 302 492 discloses a device enabling a user to scroll through a document using a swipe operation, wherein the initial speed of a swipe operation is determined and a scrolling distance is calculated based on the determined initial speed.

However, these arts are made without giving consideration to characteristics included in graphs or coordinate systems. Therefore, in the case where the display content in a coordinate system, such as a graph(s) based on a mathematical formula, is momentum-scrolled, the momentum-scrolling cannot be stopped at a proper position.

Objects of the present invention include providing a graph display apparatus, a graph display method and a storage medium having stored thereon a graph display program each of which can reduce user's troublesomeness in momentum-scrolling a graph displayed in a coordinate system.
This is achieved by the features of the independent claims.
FIG. 1 is a block diagram showing the functional configuration of a graph display apparatus;
FIG. 2 is a flowchart of a graph display process;
FIG. 3 is a flowchart of a drag process;
FIG. 4 is a flowchart of a swipe process;
FIG. 5 is a flowchart of an enlargement/reduction process;
FIGS. 6A to 6C each show display content on a display;
FIG. 7A shows an XY plane;
FIGS. 7B to 7D each show the display content on the display;
FIG. 8 is a flowchart of a swipe process;
FIGS. 9A to 9C each show the display content on the display; and
FIGS. 10A and 10B each show the display content on the display.

In the following, an embodiment of the present invention is described in detail with reference to the attached drawings. However, the scope of the present invention is not limited thereto.

### [Configuration]

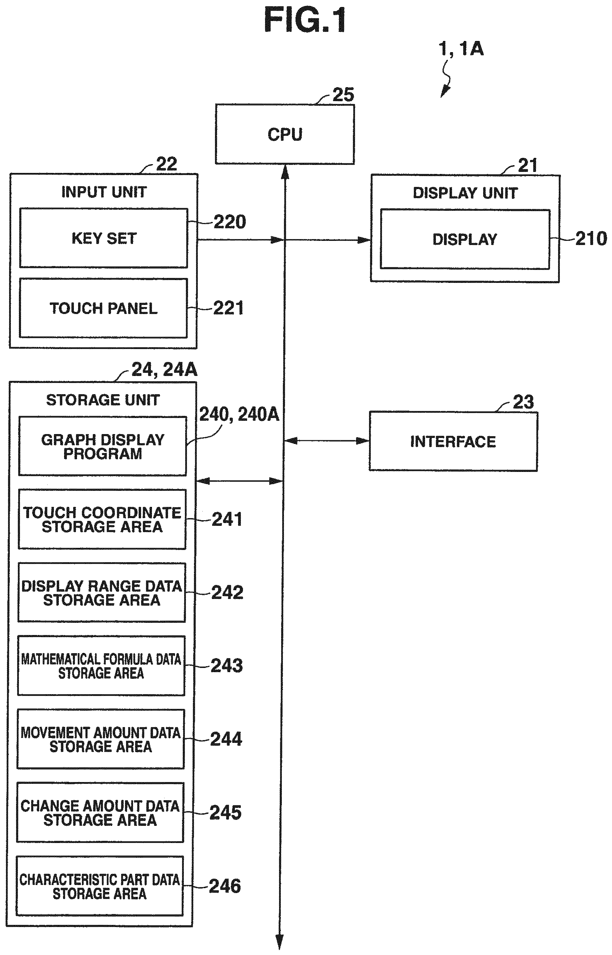

FIG. 1 is a block diagram showing the functional configuration of a graph display apparatus 1 according to the embodiment.

As shown in FIG. 1, the graph display apparatus 1 includes a display unit 21, an input unit 22, an interface 23, a storage unit 24 and a CPU 25.

The display unit 21 includes a display 210, and various pieces of information are displayed on the display 210 in response to display signals input from the CPU 25. The display 210 of the embodiment is integrally formed with a touch panel 221 and can receive touch operations performed by a user.

The input unit 22 includes a key set 220 and the touch panel 221 and outputs signals corresponding to types of pressed keys or touch points on the touch panel 221 to the CPU 25.

The interface 23 is a connection terminal to connect to a not-shown external apparatus. In the embodiment, the interface 23 reads mathematical formula data and the like from the external apparatus via a USB cable, so that the data can be stored in the storage unit 24.

The storage unit 24 is a memory which stores therein programs and data to realize various functions of the graph display apparatus 1 and functions as a work area for the CPU 25. In the embodiment, the storage unit 24 stores therein a graph display program 240 and the like of the present invention and has a touch coordinate storage area 241, a display range data storage area 242, a mathematical formula data storage area 243, a movement amount data storage area 244, a change amount data storage area 245, a characteristic part data storage area 246 and the like.

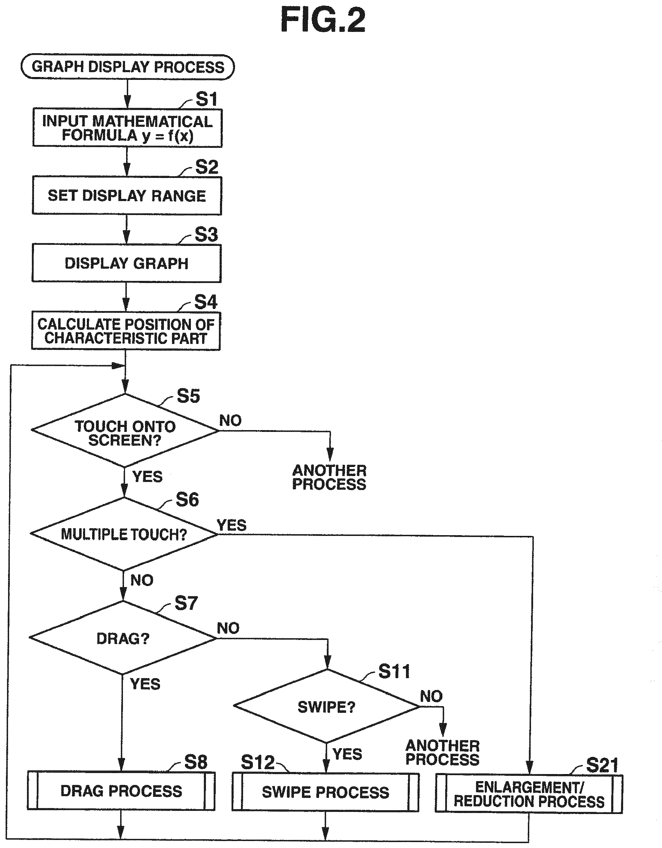

The graph display program 240 is a program for the CPU 25 to perform a graph display process (FIG. 2) described below.

The touch coordinate storage area 241 stores therein coordinates of touch points (positional information in a display area) at which a user performs touch operations in the graph display process.

The display range data storage area 242 stores therein a display range (Xmin, Xmax, Ymin, Ymax) of an XY coordinate system set to the display area of the display 210 in the graph display process.

The mathematical formula data storage area 243 stores therein mathematical formula data of functions input by a user in the graph display process.

The movement amount data storage area 244 stores therein a total movement amount (dX, dY) or the like used to scroll (move) the content displayed within the display range (Xmin, Xmax, Ymin, Ymax) of the coordinate system in the graph display process.

The change amount data storage area 245 stores therein a change amount per unit time (ΔX, ΔY) or the like used to scroll the content displayed within the display range (Xmin, Xmax, Ymin, Ymax) of the coordinate system in the graph display process.

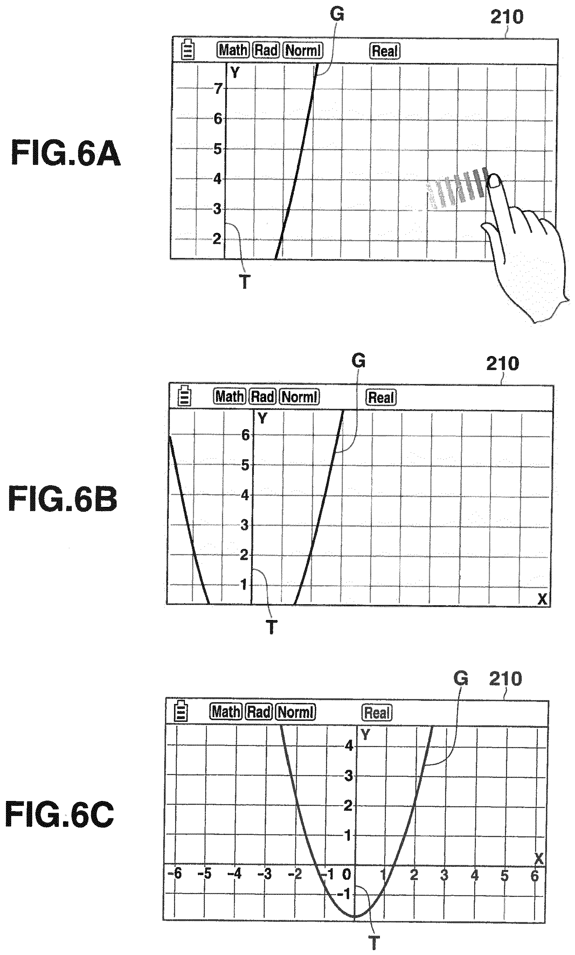

The characteristic part data storage area 246 stores therein positional information (positional information in the coordinate system and positional information in the display area) about characteristic parts T (FIGS. 6A to 6C) of the coordinate system and a graph (s) G displayed in the coordinate system in the graph display process. In the embodiment, as the characteristic parts T of the coordinate system and the graph G, coordinate axes and characteristic points (for example, an inflection point) of the graph G are used.

The CPU 25 performs centralized-control on the components of the graph display apparatus 1. More specifically, the CPU 25 executes a system program stored in the storage unit 24 and a program(s) specified from various application programs stored in the storage unit 24, whereby various types of action of the graph display apparatus 1 can be performed.

### [Action]

Next, the graph display process performed by the graph display apparatus 1 is described with reference to the drawings.

FIG. 2 is a flowchart to explain actions of the graph display process. The graph display process is performed by the CPU 25 and the graph display program 240 working together. More specifically, when a user inputs a command to execute the graph display process through the input unit 22, the CPU 25 reads the graph display program 240 from the storage unit 24 and loads the read graph display program 240 into a RAM (not shown) so as to perform the graph display process.

In the graph display process, first, the CPU 25 inputs a function (y = f(x)) of variables x and y according to a user operation and stores the function in the mathematical formula data storage area 243 (Step S1).

Next, the CPU 25 sets a display range (Xmin, Xmax, Ymin, Ymax) of an XY coordinate system to the display area of the display 210 according to a user operation and stores the display range in the display range data storage area 242 (Step S2) . The CPU 25 may read the content of a display range previously set and set the read display range to the display area. The CPU 25 may set scale intervals of the coordinate axes in addition to the display range of the coordinate system.

Next, the CPU 25 displays (draws) a graph G of the function (mathematical formula) input at Step S1, or a graph G of the function input at Step S1 within the display range set at Step S2 to be more specific, on the display 210 (Step S3). In the embodiment, in order to generate the graph G, the CPU 25 changes X values from Xmin to Xmax of the display range in such a way as to correspond to pixels of the display 210 within the display range one-to-one, substitutes the X values into the function (y = f(x)) in order so as to calculate Y values, and plots the (X, Y) coordinate points to draw the graph G in the display area. If the coordinate axes exist inside the display range, the coordinate axes are also drawn. Hereinafter, the "display content" regarding graphs includes graphs G of functions and coordinate axes.

Next, the CPU 25 calculates characteristic parts T of the coordinate system and the graph G and temporarily stores positional information (positional information in the coordinate system and positional information in the display area) about the characteristic parts T in the characteristic part data storage area 246 (Step S4).

Next, the CPU 25 determines whether or not a user touches the display 210 (Step S5) . When determining that no user touches the display 210 (Step S5; NO), the CPU 25 moves to another process.

On the other hand, when determining that a user touches the display 210 (Step S5; YES), the CPU 25 stores coordinates of the touch point(s) (positional information in the display area) in the touch coordinate storage area 241 and determines whether or not the user touches multiple points on the display 210, namely, whether or not multiple touch is performed (Step S6) .

The CPU 21 determines that multiple touch is not performed (Step S6; NO) when the user touches the display 210 with one finger or a pen. Then, the CPU 21 determines whether or not a drag operation is performed by the touch (Step S7) . The "drag" is an action to slowly move a finger or a pen sideways on a screen.

When determining that a drag operation is performed by the touch (Step S7; YES), the CPU 25 performs a drag process to scroll the display content following the movement of the finger or pen (Step S8).

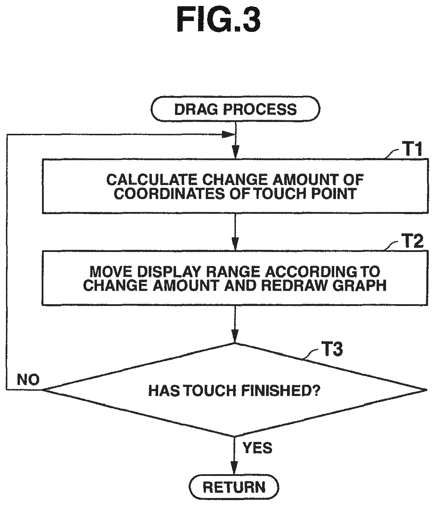

The drag process is described in detail with reference to FIG. 3. In the drag process, first, the CPU 25 refers to the touch coordinate storage area 241 and calculates a change amount of coordinates of the touch point made by the drag operation (Step T1).

Next, the CPU 25 changes the display range of the coordinate system according to the calculated change amount, stores the changed display range in the display range data storage area 242, sets the changed display range to the display 210 (resets the display range), calculates values of the function within the reset display range, and redraws the graph G of the function in the display area (Step T2) . Thus, in response to the drag operation, the display range of the coordinate system changes, and the display content scrolls.

Next, the CPU 25 determines whether or not the touch onto the display 210 has finished (Step T3). When determining that the touch onto the display 210 has not finished yet (Step T3; NO), the CPU 25 returns to Step T1 to repeat the process to scroll the display content following the movement of the touch point.

On the other hand, when determining that the drag operation has finished and the touch onto the display 210 has finished (Step T3; YES), the CPU 25 returns to Step S5 shown in FIG. 2.

When determining at Step S7 that a drag operation is not performed by the touch (Step S7; NO), the CPU 25 determines whether or not a swipe operation is performed by the touch (Step S11). The "swipe" is an action to quickly move a finger or a pen sideways on a screen.

When determining that a swipe operation is not performed by the touch (Step S11; NO), the CPU 25 moves to another process. On the other hand, when determining that a swipe operation is performed by the touch (Step S11; YES), the CPU 25 performs a swipe process (Step S12).

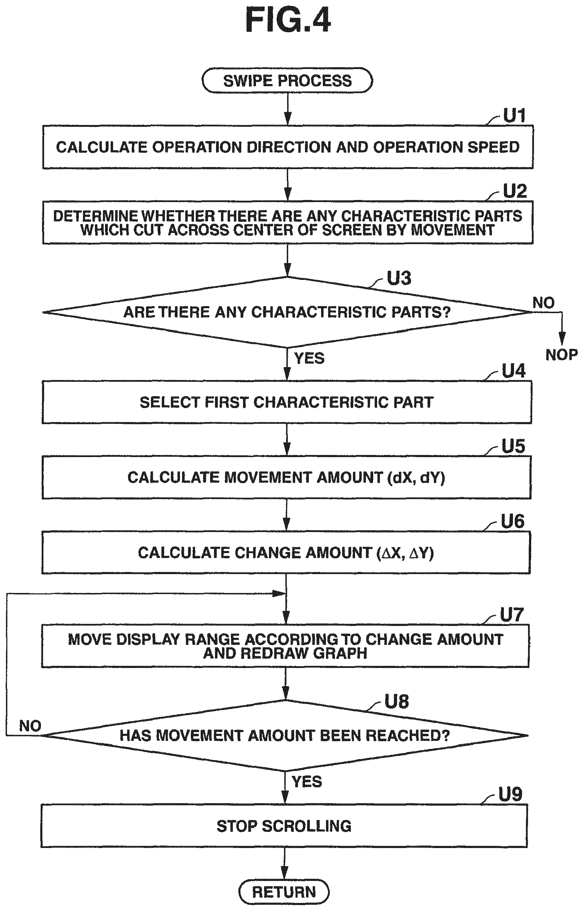

The swipe process is described in detail with reference to FIG. 4. In the swipe process, first, the CPU 25 calculates the direction of the swipe operation (hereinafter, a scroll direction) and the speed of the swipe operation (hereinafter, a swipe speed) (Step U1).

Next, the CPU 25 reads the positional information about the characteristic parts T of the coordinate system and the graph G from the characteristic part data storage area 246 and determines whether or not there are any characteristic parts T which cut across the center of the display area when the momentum-scrolling is performed in the scroll direction (Step U2) . The center of the display area is the center of the display area in the X direction and/or the Y direction. It is unnecessary that the center of the display area is the exact center of the display area in the X direction and/or the Y direction. The center thereof is determined with some tolerance according to the display content and/or the state of the graph display apparatus 1.

When determining that there are no characteristic parts T which cut across the center of the display area (Step U3; NO), the CPU 25 performs no process (NOP).

On the other hand, when determining that there is at least one characteristic part T which cuts across the center of the display area (Step U3; YES), the CPU 25 selects, from among the at least one characteristic part T, a characteristic part T which cuts across the center of the display area first (Step U4), and calculates the total movement amount (dX, dY) used to scroll the display content so that the selected characteristic part T reaches the center of the display area and stores the calculated total movement amount (dX, dY) in the movement amount data storage area 244 (Step U5).

Next, the CPU 25 calculates the change amount (ΔX, ΔY) of the display range (Xmin, Xmax, Ymin, Ymax) per unit time from the calculated total movement amount (dX, dY) and the swipe speed and stores the calculated change amount (ΔX, ΔY) in the change amount data storage area 245 (Step U6).

Next, the CPU 25 changes the display range of the coordinate system according to the calculated change amount (ΔX, ΔY), stores the changed display range in the display range data storage area 242, sets the changed display range to the display 210 (resets the display range), calculates values of the function within the reset display range, and redraws the graph G of the function in the display area (Step U7). By executing the contents of this step at unit time intervals, in response to the swipe operation, the display content momentum-scrolls in the scroll direction.

Next, the CPU 25 determines whether or not the display content has momentum-scrolled by the total movement amount (dX, dY) stored in the movement amount data storage area 244 (Step U8). When determining that the display content has not momentum-scrolled by the total movement amount (dX, dY) yet (Step U8; NO), the CPU 25 returns to Step U7. When returning to Step U7, the CPU 25 may slow down the scroll speed by one level so as to gradually decrease the scroll speed over time.

On the other hand, when determining that the display content has momentum-scrolled by the total movement amount (dX, dY) (Step U8; YES), the CPU 25 stops the momentum-scrolling (Step U9). Thus, in the case of the momentum-scrolling, the momentum-scrolling stops at a time when the characteristic part T reaches the center of the display area.

When determining at Step S6 that multiple touch is performed (Step S6; YES), the CPU 25 performs an enlargement/reduction process (Step S21).

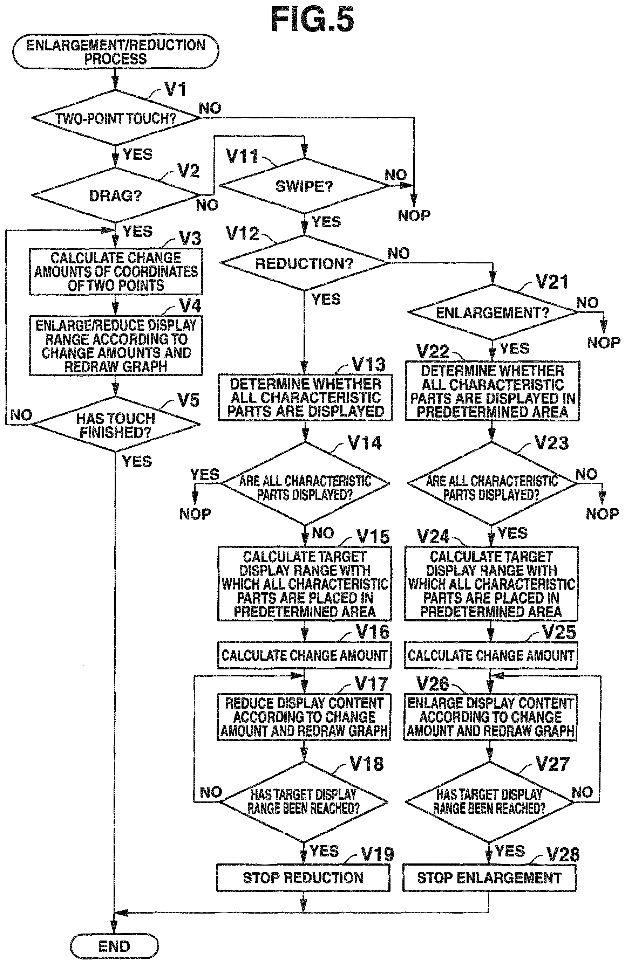

The enlargement/reduction process is described in detail with reference to FIG. 5. In the enlargement/reduction process, first, the CPU 25 determines whether or not the multiple touch is two-point touch (Step V1). When determining that the multiple touch is not two-point touch but three- or more-point touch (Step V1; NO), the CPU 25 performs no process (NOP).

On the other hand, when determining that the multiple touch is two-point touch (Step V1; YES), the CPU 25 determines whether or not a drag operation for pinch-out/pinch-in is performed by the two-point touch (Step V2).

When determining that a drag operation for pinch-out/pinch-in is performed by the two-point touch (Step V2; YES), the CPU 25 refers to the touch coordinate storage area 241 and calculates the change amounts of coordinates of the two touch points made by the drag operation (Step V3).

Next, the CPU 25 changes the display range of the coordinate system according to the calculated change amounts, stores the changed display range in the display range data storage area 242, sets the changed display range to the display 210 (resets the display range), calculates values of the function within the reset display range, and redraws the graph G of the function in the display area (Step V4). Thus, in response to the drag operation, the display content enlarges/reduces.

Next, the CPU 25 determines whether or not the touch onto the display 210 has finished (Step V5). When determining that the touch onto the display 210 has not finished yet (Step V5; NO), the CPU 25 returns to Step V3.

On the other hand, when determining that the touch onto the display 210 has finished (Step V5; YES), the CPU 25 ends the enlargement/reduction process and returns to Step S5 shown in FIG. 2.

When determining at Step V2 that a drag operation for pinch-out/pinch-in is not performed by the two-point touch (Step V2; NO), the CPU 25 determines whether or not a swipe operation is performed by the two-point touch (Step V11).

When determining that a swipe operation is not performed by the two-point touch (Step V11; NO), for example, when recognizing that two points on the display 210 is touched but not recognizing any movement, the CPU 25 performs no process (NOP) .

On the other hand, when determining that a swipe operation is performed by the two-point touch (Step V11; YES), the CPU 25 determines whether or not the swipe operation is for pinch-in (reduction) (Step V12).

When determining that the swipe operation is for pinch-in (Step V12; YES), the CPU 25 determines whether or not all the characteristic parts T exist inside the current display range (Xmin, Xmax, Ymin, Ymax) of the coordinate system (Step V13).

When determining that all the characteristic parts T exist inside the current display range (Step V14; YES), the CPU 25 does not do anything about the swipe operation (NOP).

On the other hand, when determining that not all the characteristic parts T exist inside the current display range (Step V14; NO), the CPU 25 calculates a display range (Xmin, Xmax, Ymin, Ymax) which is larger than the current display range and with which all the characteristic parts T are placed in a predetermined area inside the peripheral edge of the display area as a target display range (Step V15).

Next, the CPU 25 calculates the swipe speed, calculates the change amount of the display range per unit time from the swipe speed, the current display range and the target display range and stores the calculated change amount in the change amount data storage area 245 (Step V16).

Next, the CPU 25 changes the display range of the coordinate system according to the calculated change amount, stores the changed display range in the display range data storage area 242, sets the changed display range to the display 210 (resets the display range), calculates values of the function within the reset display range, and redraws the graph G of the function in the display area (Step V17). Thus, in response to the swipe operation, the display range of the coordinate system automatically and continuously enlarges, and the display content reduces with inertia.

Next, the CPU 25 determines whether or not the current display range matches the target display range, namely, whether or not the display range has been enlarged (the display content has been reduced) to the target display range (Step V18). When determining that the current display range does not match the target display range (Step V18; NO), the CPU 25 returns to Step V17.

On the other hand, when determining that the current display range matches the target display range (Step V18; YES), the CPU 25 stops the reduction of the display content in the coordinate system (Step V19) and ends the enlargement/reduction process.

When determining at Step V12 that the swipe operation is not for pinch-in (reduction) (Step V12; NO), the CPU 25 determines whether or not the swipe operation is for pinch-out (enlargement) (Step V21).

When determining that the swipe operation is not for pinch-out (Step V21; NO), the CPU 25 does not do anything about the swipe operation (NOP).

On the other hand, when determining that the swipe operation is for pinch-out (Step V21; YES), the CPU 25 determines whether or not all the characteristic parts T are placed in a predetermined area inside the peripheral edge of the display area (Step V22) . This predetermined area is arranged at the center of a display screen of the display 210 and has a display size of about a half of the display size of the whole display area, for example.

When determining that not all the characteristic parts T are placed in the predetermined area (Step V23; NO), the CPU 25 does not do anything about the swipe operation (NOP).

On the other hand, when determining that all the characteristic parts T are placed in the predetermined area (Step V23; YES), the CPU 25 calculates a display range (Xmin, Xmax, Ymin, Ymax) with which all the characteristic parts T are placed in the predetermined area inside the peripheral edge of the display area as a target display range (Step V24).

Next, the CPU 25 calculates the swipe speed, calculates the change amount of the display range per unit time from the swipe speed, the current display range and the target display range and stores the calculated change amount in the change amount data storage area 245 (Step V25).

Next, the CPU 25 changes the display range of the coordinate system according to the calculated change amount, stores the changed display range in the display range data storage area 242, sets the changed display range to the display 210 (resets the display range), calculates values of the function within the reset display range, and redraws the graph G of the function in the display area (Step V26). Thus, in response to the swipe operation, the display range of the coordinate system automatically and continuously reduces, and the display content enlarges with inertia.

Next, the CPU 25 determines whether or not the current display range matches the target display range, namely, whether or not the display range has been reduced (the display content has been enlarged) to the target display range (Step V27) . When determining that the current display range does not match the target display range (Step V27; NO), the CPU 25 returns to Step V26.

On the other hand, when determining that the current display range matches the target display range (Step V27; YES), the CPU 25 stops the enlargement of the display content in the coordinate system (Step V28) and ends the enlargement/reduction process.

### [Action Examples]

Next, the action of the graph display apparatus 1 is described in detail with reference to the drawings.

### (First Action Example)

First, a user inputs a function "y = x² - 2" (Step S1) and sets a display range of an XY coordinate system, "Xmin = -1, Xmax = 11, Ymin = 2, Ymax = 8", to the display area of the display 210 (Step S2) . Then, as shown in FIG. 6A, a graph G of the function "y = x² - 2" within the display range is displayed (drawn) on the display 210 (Step S3).

Next, when the user performs a swipe operation in the slightly-upper-right direction (Step S11; YES), the slightly-upper-right direction is calculated as the scroll direction, and the swipe speed is calculated (Step U1).

Next, it is determined that there is at least one characteristic part T which cuts across the center of the display area when the momentum-scrolling is performed in the scroll direction (Step U3; YES), and a characteristic part T (Y axis in this example) which cuts across the center of the display area first is selected from among the at least one characteristic part T (Step U4).

Next, the total movement amount (dX, dY) used to scroll the display content in the coordinate system so that the selected characteristic part T (Y axis) reaches the center of the display area is calculated (Step U5), and also the change amount (ΔX, ΔY) of the display range per unit time is calculated (Step U6) .

Next, as shown in FIG. 6B, the display range is reset according to the calculated change amount (ΔX, ΔY), values of the function within the reset display range are calculated, and the graph G of the function is redrawn in the display area (Step U7). By executing the contents of this step at unit time intervals, the display content momentum-scrolls in the scroll direction.

When it is determined that the display content has momentum-scrolled by the total movement amount (dX, dY) (Step U8; YES), as shown in FIG. 6C, the momentum-scrolling stops (Step U9). Thus, the momentum-scrolling stops at a time when the characteristic part T (Y axis) reaches the center of the display area.

### (Second Action Example)

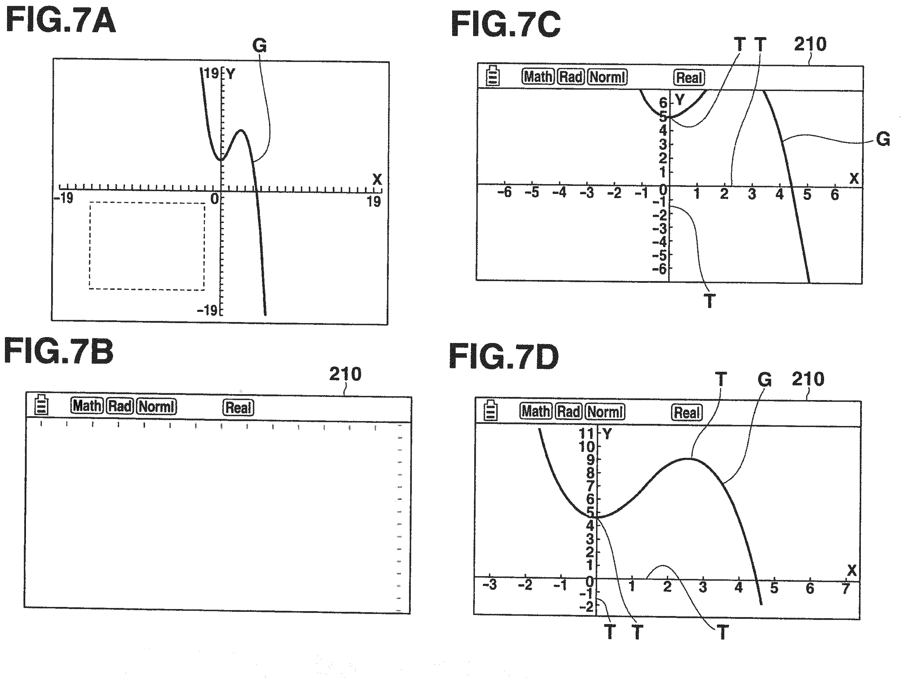

For example, a user inputs a function "y = -0.5x³ + 2x² + 5" (Step S1) and sets a display range of an XY coordinate system, "Xmin = -16, Xmax = -2, Ymin = -16, Ymax = -2", to the display area of the display 210 (Step S2) . In this case, a relationship between a graph and a display range is as shown in FIG. 7A. The range indicated by a broken-line frame is the display range.

Although the CPU 25 attempts to display a graph G of the function "y = -0.5x³ + 2x² + 5" within the display range "Xmin = -16, Xmax = -2, Ymin = -16, Ymax = -2" on the display 210, the graph G within the display range does not exist. Therefore, as shown in FIG. 7B, no graph G is displayed on the display 210. Neither the X axis nor the Y axis exists inside the display range. Then, coordinate gradations are displayed on edge parts on sides in the display area of the display 210, the sides where the X axis and the Y axis exist, respectively.

Next, when the user performs a swipe operation in the lower-left direction (Step S11; YES), the lower-left direction is calculated as the scroll direction, and the swipe speed is calculated (Step U1).

Next, it is determined that there is at least one characteristic part T which cuts across the center of the display area when the momentum-scrolling is performed in the scroll direction (Step U3; YES), and a characteristic part T (Y axis in this example) which cuts across the center of the display area first is selected from among the at least one characteristic part T (Step U4).

Next, the total movement amount (dX, dY) used to scroll the display content in the coordinate system so that the selected characteristic part T (Y axis) reaches the center of the display area is calculated (Step U5), and also the change amount (ΔX, ΔY) of the display range per unit time is calculated (Step U6).

Next, the display range of the coordinate system is changed (reset) according to the calculated change amount (ΔX, ΔY), values of the function "y = -0.5x³ + 2x² + 5" within the reset display range are calculated, and the graph G of the function is drawn in the display area (Step U7). By executing the contents of this step at unit time intervals, the display content (blank display content with coordinate gradations in this example) in the coordinate system momentum-scrolls in the scroll direction.

When it is determined that the display content has momentum-scrolled by the total movement amount (dX, dY) (Step U8; YES), as shown in FIG. 7C, the momentum-scrolling stops (Step U9). Thus, the momentum-scrolling stops at a time when the characteristic part T (Y axis) reaches the center of the display area.

Next, when the user performs a swipe operation for pinch-in (Step V12; YES), it is determined that not all the characteristic parts T exist inside the current display range (Xmin = -7, Xmax = 7, Ymin = -7, Ymax = 7) of the coordinate system (Step V14; NO), and a display range (Xmin = -3, Xmax = 7, Ymin = -3, Ymax = 11) which is larger than the current display range and with which all the characteristic parts T are placed in a predetermined area inside the peripheral edge of the display area is calculated as a target display range (Step V15) .

Next, the swipe speed and the change amount of the display range per unit time are calculated (Step V16), and the display range of the coordinate system is reset according to the calculated change amount, values of the function "y = -0.5x³ + 2x² + 5" within the reset display range are calculated, and the graph G of the function is redrawn in the display area (Step V17) as shown in FIG. 7D. By executing the contents of this step at unit time intervals, the display range of the coordinate system automatically and continuously enlarges, and the display content reduces with inertia.

When it is determined that the current display range matches the target display range, namely, the display range has been enlarged (the display content has been reduced) to the target display range (Step V18; YES), the reduction of the display content stops (Step V19) . Thus, the reduction stops at a time when all the characteristic parts T are displayed.

As described above, according to the embodiment, as shown in FIGS. 4, 6A to 6C, 7A to 7D and the like, the display content in the coordinate system is momentum-scrolled in the scroll direction according to a user operation, and the momentum-scrolling is stopped at a time when a characteristic part T of the coordinate system and/or the graph G reaches the center of the display area. Hence, in the case where the display content in the coordinate system is momentum-scrolled, the momentum-scrolling can be stopped at a proper position. Therefore, as compared with the conventional arts, user's troublesomeness in momentum-scrolling the display content in the coordinate system can be reduced.

### [Modification]

Next, a modification of the graph display apparatus 1 of the embodiment is described. The components which are the same as those of the embodiment are denoted by the same reference symbols, and description thereof is omitted.

### [Configuration]

As shown in FIG. 1, a graph display apparatus 1A according to the modification includes a storage unit 24A. The storage unit 24A stores a graph display program 240A of the present invention therein.

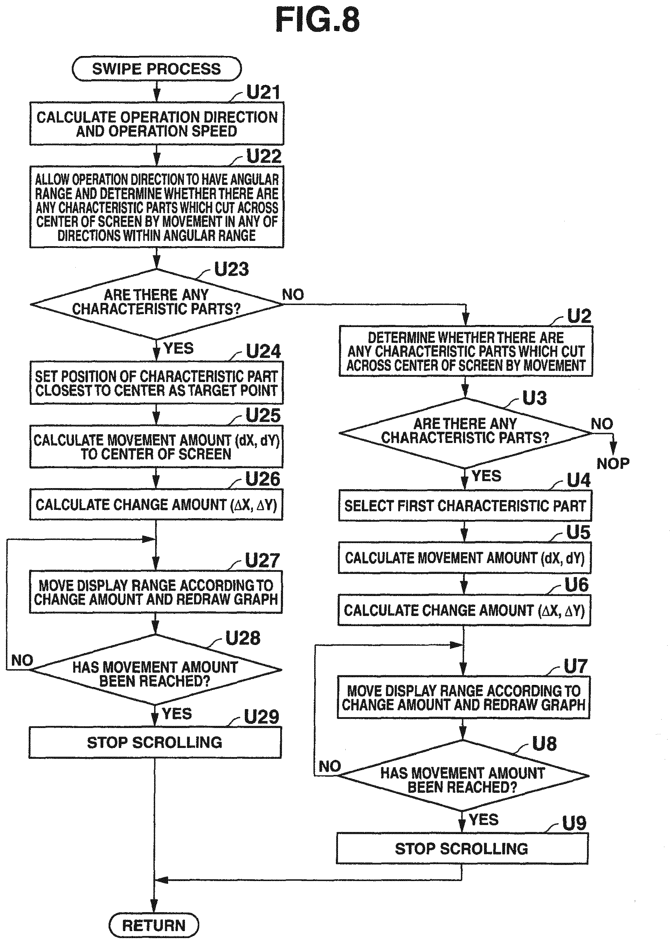

The graph display program 240A is a program for the CPU 25 to perform a graph display process which is the same as that shown in FIG. 2 except that, at Step S12 in the graph display process, the CPU 25 performs a swipe process shown in FIG. 8 described below instead of the swipe process shown in FIG. 4.

### [Action]

Next, the swipe process performed by the graph display apparatus 1A is described with reference to the drawings.

FIG. 8 is a flowchart to explain actions of the swipe process.

As shown in FIG. 8, in the swipe process of the modification, first, the CPU 25 calculates the direction of the swipe operation (hereinafter, a scroll direction) and the speed of the swipe operation (hereinafter, a swipe speed) (Step U21) .

Next, the CPU 25 allows the scroll direction to have a predetermined angular range (for example, 30°) and determines whether or not there are any characteristic parts T which cut across the center of the display area when the momentum-scrolling is performed in any of scroll directions within the angular range (Step U22). At Steps U22 to U29 described below, the CPU 25 uses a characteristic point (for example, an inflection point) of a graph G as a characteristic part T. However, in addition to the characteristic point of the graph G, the origin may be used as a characteristic part T.

When determining that there are no characteristic parts T which cut across the center of the display area (Step U23; NO), the CPU 25 performs Steps U2 to U9 described above and then ends the swipe process.

On the other hand, when determining that there is at least one characteristic part T which cuts across the center of the display area (Step U23; YES), the CPU 25 sets, as a target point, the position of a characteristic part T (characteristic point of the graph G in the modification) closest to the center of the display screen among the at least one characteristic part T, which is determined to cut across the center of the display area, among characteristic parts T of the coordinate system and the graph G and sets a direction from the target point toward the center of the display screen as the scroll direction (Step U24) . Thus, the scroll direction is set in such a way that the characteristic part T moves to the center of the display area by the momentum-scrolling.

Next, the CPU 25 calculates the total movement amount (dX, dY) used to scroll the display range (Xmin, Xmax, Ymin, Ymax) so that the target point reaches the center of the display area and stores the calculated total movement amount (dX, dY) in the movement amount data storage area 244 (Step U25).

Next, the CPU 25 calculates the change amount (ΔX, ΔY) of the display range (Xmin, Xmax, Ymin, Ymax) per unit time from the calculated total movement amount (dX, dY) and the swipe speed and stores the calculated change amount (ΔX, ΔY) in the change amount data storage area 245 (Step U26).

Next, the CPU 25 changes the display range of the coordinate system according to the calculated change amount (ΔX, ΔY), stores the changed display range in the display range data storage area 242, sets the changed display range to the display 210 (resets the display range), calculates values of the function within the reset display range, and redraws the graph G of the function in the display area (Step U27). Thus, in response to the swipe operation, the graph G momentum-scrolls in the scroll direction.

Next, the CPU 25 determines whether or not the display range has momentum-scrolled by the total movement amount (dX, dY) stored in the movement amount data storage area 244, namely, whether or not the characteristic part T as the target point has moved to the center of the display area (Step U28). When determining that the display range has not momentum-scrolled by the total movement amount (dX, dY) yet (Step U28; NO), the CPU 25 returns to Step U27. When returning to Step U27, the CPU 25 may slow down the scroll speed by one level.

On the other hand, when determining that the display range has momentum-scrolled by the total movement amount (dX, dY) (Step U28; YES), the CPU 25 stops the momentum-scrolling (Step U29) and ends the swipe process. Thus, in the case of the momentum-scrolling, the momentum-scrolling stops at a time when the characteristic part T reaches the center of the display area.

### [Action Example]

Next, the action of the graph display apparatus 1A is described in detail with reference to the drawings.

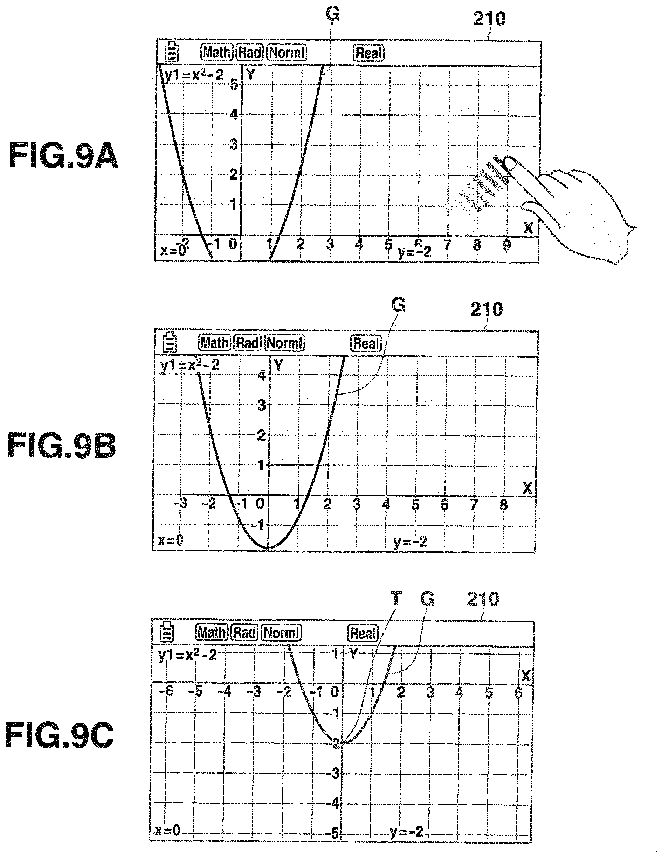

First, a user inputs a function "y = x² - 2" (Step S1) and sets a display range of an XY coordinate system, "Xmin = -3, Xmax = 10, Ymin = -1, Ymax = 6", to the display area of the display 210 (Step S2). Then, as shown in FIG. 9A, a graph G of the function "y = x² - 2" within the display range is displayed (drawn) on the display 210 (Step S3).

Next, when the user performs a swipe operation in the upper-right direction (Step S11), the upper-right direction is calculated as the scroll direction, and the swipe speed is calculated (Step U21).

Next, it is determined that there is a characteristic part T (an inflection point of the graph G in this example) which cuts across the center of the display area when the momentum-scrolling is performed in any of scroll directions within a predetermined angular range (Step U23; YES), the position of the characteristic point T (inflection point of the graph G) is set as a target point, and a direction (upper-right direction in this example) from the target point toward the center of the display screen is set as the scroll direction (Step U24). Thus, the scroll direction is set in such a way that the characteristic part T (inflection point of the graph G) moves to the center of the display area by the momentum-scrolling.

Next, the total movement amount (dX, dY) used to scroll the display range (Xmin, Xmax, Ymin, Ymax) of the coordinate system so that the target point reaches the center of the display area is calculated (Step U25), and also the change amount (ΔX, ΔY) of the display range per unit time is calculated (Step U26) .

Next, as shown in FIG. 9B, the display range of the coordinate system is reset according to the calculated change amount (ΔX, ΔY), values of the function "y = x² - 2" within the reset display range are calculated, and the graph G of the function is redrawn in the display area (Step U27) . By executing the contents of this step at unit time intervals, the display range of the coordinate system momentum-scrolls in the scroll direction.

When it is determined that the display range has momentum-scrolled by the total movement amount (dX, dY) (Step U28; YES), as shown in FIG. 9C, the momentum-scrolling of the display range of the coordinate system stops (Step U29). Thus, the momentum-scrolling stops at a time when the characteristic part T (inflection point of the graph G) reaches the center of the display area.

As described above, according to the modification, in addition to the effects obtained by the graph display apparatus 1 of the embodiment, as shown in FIGS. 8 (Step U22), 9A to 9C and the like, the scroll direction is set in such a way that a characteristic part T moves to the center of the display area by the momentum-scrolling. Hence, even if the scroll direction is not accurately set, the momentum-scrolling can be stopped at a proper position. Since it is unnecessary to set the scroll direction accurately, user's troublesomeness in momentum-scrolling the display range of the coordinate system can be further reduced.

It is needless to say that the detailed configuration and action of each component of the graph display apparatus 1 of the embodiment (or the graph display apparatus 1A of the modification) can be appropriately modified without departing from the scope of the present invention.

For example, the graph display apparatus of the present invention is applicable to electronic devices in general such as a scientific electronic calculator, an electronic dictionary, a mobile phone, a personal computer, a PDA (Personal Digital Assistant) and a game machine. Further, the graph display program 240 (or 240A) of the present invention may be stored in a memory card, a CD or the like attachable/detachable to/from the graph display apparatus 1 (or 1A).

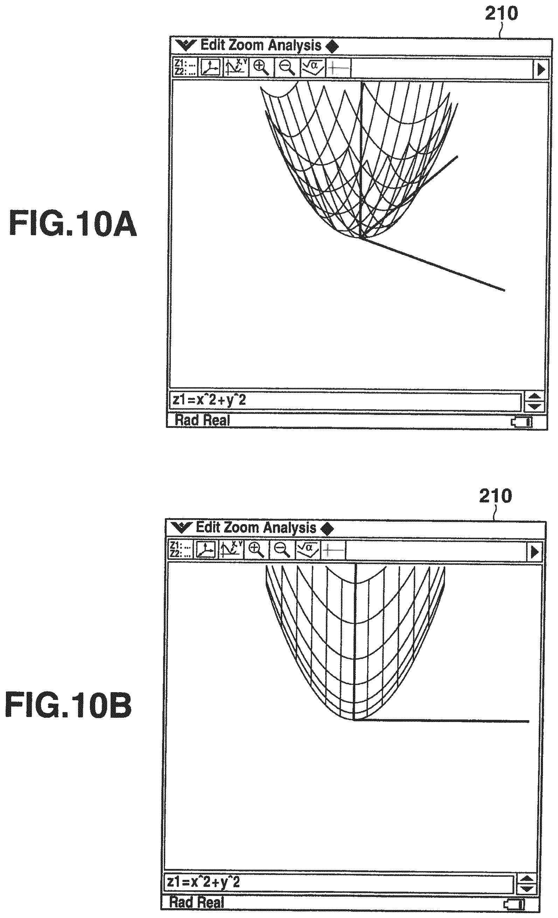

Further, in the above, the coordinate axes of the coordinate system are the X axis and the Y axis. However, coordinate axes of other names may be used. Further, in the above, the coordinate system is the cartesian coordinate system. However, another type of coordinate system such as an oblique coordinate system or a polar coordinate system may be used. Further, in the above, the coordinate system is two dimensional. However, as shown in FIG. 10A, the coordinate system may be three dimensional. In this case, as shown in FIGS. 10A and 10B, it is preferable that, in response to a swipe operation, the display content in the coordinate system automatically rotate on the origin with inertia, and the automatic rotation is stopped at a time when any of the coordinate axes matches the longitudinal direction (vertical direction) or the lateral direction (horizontal direction).

Further, in the swipe process described with reference to FIG. 4 or 8, the momentum-scrolling is stopped at a time when a characteristic part T reaches the center of the display area (at a time when the total movement amount of the momentum-scrolling is made). However, the momentum-scrolling may be stopped at a time when a characteristic part T reaches the center of the display area only when the speed of the momentum-scrolling at the time is equal to or less than a predetermined speed. In this case, by a user increasing the swipe speed, the momentum-scrolling can continue without stopping even when a characteristic part T reaches the center of the display area. Accordingly, a situation in which the momentum-scrolling automatically stops although a user does not expect it can be prevented from happening.

Further, in the above, the total movement amount is determined before the momentum-scrolling. However, it is possible that whether or not a characteristic part T reaches the center of the display area is determined while the display content is strolled, and the momentum-scrolling is stopped at a time when it is determined that the characteristic part T reaches the center thereof.

In the above, several embodiments or the like of the present invention are described. However, the scope of the present invention is not limited thereto and hence includes the scope of claims attached below and the scope of equivalents.

## Claims

1. A graph display method for a graph display apparatus including a display device, the graph display method **characterized by** the steps of:
setting (S1 to S3) an XY coordinate system, to which a display range in an X-direction and a Y-direction is set, to a display area of the display device and displaying a graph of a function in the coordinate system;
setting (U1) a scroll direction and a scroll speed according to an operation performed by a user;
determining (U2, U3) whether, among characteristic parts of the coordinate system and the graph, any characteristic part cuts across a center of the display area in the X-direction or in the Y-direction when the displayed graph is moved in the scroll direction;
(i) in case that it is determined that any characteristic part cuts across the center of the display area in the X-direction or in the Y-direction when the displayed graph is moved in the scroll direction;
specifying (U4), from among characteristic parts of the coordinate system and the graph, a characteristic part which cuts first across a center of the display area in the X-direction or in the Y-direction, when the displayed graph is moved in the scroll direction;
calculating (U5) a movement amount for the specified characteristic part to reach the center of the display area;
calculating (U6) a change amount of the display range of the coordinate system on the basis of the calculated movement amount and the set scroll speed
repeatedly changing (U7 to U9) the display range, which is set to the coordinate system, on the basis of the calculated change amount until the calculated movement amount is reached and displaying (U7 to U9) the graph of the function within the display range each time changing the display range; and
(ii) in case that it is determined that any characteristic part does not cut across the center of the display area in the X-direction or in the Y-direction when the displayed graph is moved in the scroll direction:
not scrolling the displayed graph.

2. The graph display method according to claim 1, wherein
in the displaying step, the display range, which is set to the coordinate system, is repeatedly changed on the basis of the calculated change amount.

3. The graph display method according to claim 1, wherein
the characteristic parts include a coordinate axis of the coordinate system and a characteristic point of the graph.

4. The graph display method according to claim 1, wherein, in the scroll direction setting step, the scroll direction is set in such a way that the characteristic part moves to the center of the display area by scrolling the displayed graph when the scroll direction is within a predetermined range (U25).

5. The graph display method according to claim 1, wherein
the display device (21) includes a touch panel (221) integrated with a display (210); and
the graph display method further comprises a step of enlarging/reducing (S6,S21) the displayed graph with a pinch-out/pinch-in operation performed by the user on the touch panel.

6. The graph display method according to claim 5, wherein the step of enlarging (S6,S21) the displayed graph comprises:
determining (V22) whether, among characteristic parts of the coordinate system and the graph, all characteristic parts are placed in a predetermined area inside the peripheral edge of the display area;
(i) enlarging (V24 - V28) the displayed graph with the pinch-out operation performed by the user on the touch panel, when it is determined that all characteristic parts are placed in a predetermined area inside the peripheral edge of the display area; and
(ii) not enlarging the displayed graph with the pinch-out operation performed by the user on the touch panel, when it is determined that not all characteristic parts are placed in a predetermined area inside the peripheral edge of the display area.

7. The graph display method according to claim 5, wherein the step of reducing (S6,S21) the displayed graph comprises
determining (V13) whether, among characteristic parts of the coordinate system and the graph, all characteristic parts are placed in a predetermined area inside the peripheral edge of the display area;
(i) not reducing the displayed graph with the pinch-in operation performed by the user on the touch panel, when it is determined that all characteristic parts are placed in a predetermined area inside the peripheral edge of the display area; and
(ii) reducing (V14 - V19) the displayed graph with the pinch-in operation performed by the user on the touch panel, when it is determined that not all characteristic parts are placed in a predetermined area inside the peripheral edge of the display area.

8. The graph display method according to claim 1, wherein
the display device (21) includes a touch panel (221) integrated with a display (21);
in the displaying step a scroll speed is set according to a speed of a swipe operation performed by the user on the touch panel (221); and
when the scroll speed is more than a predetermined scroll speed, the scrolling of the displayed graph is not stopped even when the calculated movement amount is reached.

9. A storage medium having stored thereon a graph display program for a computer including a display device, the graph display program causing the computer to execute the graph display method according to any of claims 1 to 8.

10. A graph display apparatus comprising:
a display device (21); and
a control unit (25) adapted to perform the graph display method according to any of claims 1 to 8.

## Patentansprüche

1. Graphenanzeigeverfahren für ein Graphenanzeigegerät mit einer Anzeigevorrichtung, wobei das Graphenanzeigeverfahren durch die folgenden Schritte gekennzeichnet ist:
Einstellen (S1 bis S3) eines XY-Koordinatensystems, auf das ein Anzeigebereich in einer X-Richtung und einer Y-Richtung eingestellt ist, auf einen Anzeigebereich der Anzeigevorrichtung und Anzeigen eines Graphen einer Funktion in dem Koordinatensystem;
Einstellen (U1) einer Bildlaufrichtung und einer Bildlaufgeschwindigkeit gemäß einer von einem Benutzer durchgeführten Tätigkeit;
Bestimmen (U2, U3), ob unter charakteristischen Teilen des Koordinatensystems und dem Graphen irgendein charakteristischer Teil ein Zentrum des Anzeigebereichs in der X-Richtung oder in der Y-Richtung überschreitet, wenn der angezeigte Graph in der Bildlaufrichtung bewegt wird;
(i) falls bestimmt wird, dass irgendein charakteristischer Teil das Zentrum des Anzeigebereichs in der X-Richtung oder in der Y-Richtung überschreitet, wenn der angezeigte Graph in der Bildlaufrichtung bewegt wird;
Spezifizieren (U4) aus charakteristischen Teilen des Koordinatensystems und des Graphen eines charakteristischen Teils, der zuerst ein Zentrum des Anzeigebereichs in der X-Richtung oder in der Y-Richtung überschreitet, wenn der angezeigte Graph in der Bildlaufrichtung bewegt wird;
Berechnen (U5) eines Bewegungsbetrags für den spezifizierten charakteristischen Teil, um das Zentrum des Anzeigebereichs zu erreichen;
Berechnen (U6) eines Änderungsbetrags des Anzeigebereichs des Koordinatensystems auf der Basis des berechneten Bewegungsbetrags und der eingestellten Bildlaufgeschwindigkeit;
wiederholtes Ändern (U7 bis U9) des Anzeigebereichs, der auf das Koordinatensystem eingestellt ist, auf der Basis des berechneten Änderungsbetrags, bis der berechnete Bewegungsbetrag erreicht ist, und Anzeigen (U7 bis U9) des Graphen der Funktion innerhalb des Anzeigebereichs jedesmal, wenn der Anzeigebereich geändert wird; und
(ii) falls bestimmt wird, dass irgendein charakteristischer Teil nicht die Mitte des Anzeigebereichs in der X-Richtung oder in der Y-Richtung überschreitet, wenn der angezeigte Graph in der Bildlaufrichtung bewegt wird:
keine Bildlaufbewegen des Graphen.

2. Graphenanzeigeverfahren nach Anspruch 1, bei dem
bei dem Anzeigeschritt der Anzeigebereich, der auf das Koordinatensystem eingestellt ist, wiederholt auf der Grundlage des berechneten Änderungsbetrags geändert wird.

3. Graphenanzeigeverfahren nach Anspruch 1, bei dem
die charakteristischen Teile eine Koordinatenachse des Koordinatensystems und einen charakteristischen Punkt des Graphen umfassen.

4. Graphenanzeigeverfahren nach Anspruch 1, bei dem in dem Bildlaufrichtungseinstellschritt die Bildlaufrichtung derart eingestellt wird, dass sich der charakteristische Teil durch Bildlaufrichtungsbewegung des angezeigten Graphen in der Bildlaufrichtung zu dem Zentrum des Anzeigebereichs bewegt, wenn die Bildlaufrichtung innerhalb eines vorbestimmten Bereichs (U25) liegt.

5. Graphenanzeigeverfahren nach Anspruch 1, bei dem
die Anzeigevorrichtung (21) ein Tastfeld (221) umfasst, das mit einer Anzeige (210) integriert ist; und
das Graphenanzeigeverfahren ferner einen Schritt des Vergrößerns/Verkleinerns (S6, S21) des angezeigten Graphen mit einer Pinch-Out/Pinch-In-Betätigung umfasst, die von dem Benutzer auf dem Tastfeld ausgeführt wird.

6. Graphenanzeigeverfahren nach Anspruch 5, bei dem der Schritt des Vergrößerns (S6, S21) des angezeigten Graphen umfasst:
Bestimmen (V22), ob unter charakteristischen Teilen des Koordinatensystems und des Graphen sämtliche charakteristischen Teile in einem vorbestimmten Bereich innerhalb des Umfangsrandes des Anzeigebereichs angeordnet sind;
(i) Vergrößern (V24-V28) des angezeigten Graphen mit der Pinch-Out-Betätigung, die von dem Benutzer auf dem Tastfeld ausgeführt wird, wenn bestimmt wird, dass sämtliche charakteristischen Teile in einem vorbestimmten Bereich innerhalb des Umfangsrandes des Anzeigebereichs angeordnet sind; und
(ii) Nichtvergrößern des angezeigten Graphen mit der Pinch-Out-Betätigung, die von dem Benutzer auf dem Tastfeld ausgeführt wird, wenn bestimmt wird, dass nicht sämtliche charakteristischen Teile in einem vorbestimmten Bereich innerhalb des Umfangsrandes des Anzeigebereichs angeordnet sind.

7. Graphenanzeigeverfahren nach Anspruch 5, bei dem der Schritt des Verkleinerns (S6, S21) des angezeigten Graphen umfasst:
Bestimmen (V13), ob unter charakteristischen Teilen des Koordinatensystems und des Graphen sämtliche charakteristischen Teile in einem vorbestimmten Bereich innerhalb des Umfangsrandes des Anzeigebereichs angeordnet sind;
(i) nicht Verkleinern des angezeigten Graphen mit der Pinch-In-Betätigung, die von dem Benutzer auf dem Tastfeld durchgeführt wird, wenn bestimmt wird, dass sämtliche charakteristischen Teile in einem vorbestimmten Bereich innerhalb des Umfangsrandes des Anzeigebereichs angeordnet sind; und
(ii) Verkleinern (V14 - V19) des angezeigten Graphen mit der Pinch-In-Betätigung, die von dem Benutzer auf dem Tastfeld durchgeführt wird, wenn bestimmt wird, dass nicht sämtliche charakteristischen Teile in einem vorbestimmten Bereich innerhalb des Umfangsrandes des Anzeigebereichs angeordnet sind.

8. Graphenanzeigeverfahren nach Anspruch 1, bei dem
die Anzeigevorrichtung (21) ein Tastfeld (221) umfasst, das mit einer Anzeige (21) integriert ist;
bei dem Anzeigeschritt eine Bildlaufgeschwindigkeit entsprechend einer Geschwindigkeit einer Wischbetätigung eingestellt wird, die von dem Benutzer auf dem Tastfeld (221) ausgeführt wird; und,
wenn die Bildlaufgeschwindigkeit mehr als eine vorbestimmte Bildlaufgeschwindigkeit ist, der Bildlauf des angezeigten Graphen nicht gestoppt wird, selbst wenn der berechnete Bewegungsbetrag erreicht ist.

9. Speichermedium, auf dem ein Graphanzeigeprogramm für einen Computer mit einer Anzeigevorrichtung gespeichert ist, wobei das Graphanzeigeprogramm bewirkt, dass der Computer das Graphanzeigeverfahren nach einem der Ansprüche 1 bis 8 ausführt.

10. Graphenanzeigegerät, umfassend:
eine Anzeigevorrichtung (21); und
eine Steuereinheit (25), die dazu eingerichtet ist, das Graphenanzeigeverfahren nach einem der Ansprüche 1 bis 8 auszuführen.

## Revendications

1. Procédé d'affichage de graphique pour un appareil d'affichage de graphique comprenant un dispositif d'affichage, le procédé d'affichage de graphique étant **caractérisé par** les étapes suivantes:
régler (S1 à S3) un système de coordonnées XY, avec une plage d'affichage dans une direction X et une direction Y, sur une zone d'affichage du dispositif d'affichage et afficher un graphique d'une fonction dans le système de coordonnées;
régler (U1) une direction de défilement et une vitesse de défilement selon une opération effectuée par un utilisateur;
déterminer (U2, U3) si, parmi les parties caractéristiques du système de coordonnées et du graphique, une partie caractéristique traverse un centre de la zone d'affichage dans la direction X ou dans la direction Y lorsque le graphique affiché est déplacé dans la direction de défilement;
(i) au cas où l'on détermine qu'une partie caractéristique traverse le centre de la zone d'affichage dans la direction X ou dans la direction Y lorsque le graphique affiché est déplacé dans la direction de défilement;
préciser (U4), parmi les parties caractéristiques du système de coordonnées et du graphique, une partie caractéristique commence par traverser un centre de la zone d'affichage dans la direction X ou dans la direction Y lorsque le graphique affiché est déplacé dans la direction de défilement;
calculer (U5) une quantité de mouvement pour que la partie caractéristique précisée atteigne le centre de la zone d'affichage;
calculer (U6) une valeur de changement de la plage d'affichage du système de coordonnées sur la base de la quantité de mouvement calculée et de la vitesse de défilement réglée pour changer de manière répétée (U7 à U9) la plage d'affichage, qui est réglée sur le système de coordonnées, sur la base de la quantité de changement calculée jusqu'à ce que le mouvement calculé soit atteint et afficher (U7 à U9) le graphique de la fonction dans la plage d'affichage à chaque fois que la plage d'affichage change; et
(ii) dans le cas où l'on détermine qu'une partie caractéristique ne traverse pas le centre de la zone d'affichage dans la direction X ou dans la direction Y lorsque le graphique affiché est déplacé dans la direction de défilement;
ne pas faire défiler le graphique affiché.

2. Procédé d'affichage de graphique selon la revendication 1, dans lequel:
dans l'étape d'affichage, la plage d'affichage, qui est définie sur le système de coordonnées, est modifiée à plusieurs reprises sur la base de la quantité de changement calculée.

3. Procédé d'affichage de graphique selon la revendication 1, dans lequel:
les parties caractéristiques comprennent un axe de coordonnées du système de coordonnées et un point caractéristique du graphique.

4. Procédé d'affichage de graphique selon la revendication 1, dans lequel, dans l'étape de réglage de la direction de défilement, la direction de défilement est définie de telle sorte que la partie caractéristique se déplace vers le centre de la zone d'affichage en faisant défiler le graphique affiché lorsque la direction de défilement est dans une plage prédéterminée (U25).

5. Procédé d'affichage de graphique selon la revendication 1, dans lequel
le dispositif d'affichage (21) comprend un panneau tactile (221) intégré à un affichage (210); et
le procédé d'affichage de graphique comprend en outre une étape d'agrandissement/réduction (S6.S21) du graphique affiché avec une opération de pincement vers l'extérieur et l'intérieur effectuée par l'utilisateur sur le panneau tactile.

6. Procédé d'affichage de graphique selon la revendication 5, dans lequel l'étape d'agrandissement (S6.S21) du graphique affiché comprend les étapes suivantes:
déterminer (V22) si, parmi les parties caractéristiques du système de coordonnées et du graphique, toutes les parties caractéristiques sont placées dans une zone prédéterminée à l'intérieur du bord périphérique de la zone d'affichage;
(i) agrandir (V24 - V28) le graphique affiché avec l'opération de pincement vers l'extérieur effectuée par l'utilisateur sur le panneau tactile, lorsque l'on détermine que toutes les parties caractéristiques sont placées dans une zone prédéterminée à l'intérieur du bord périphérique de la zone d'affichage; et
(ii) ne pas agrandir le graphique affiché avec l'opération de pincement vers l'extérieur effectuée par l'utilisateur sur le panneau tactile, lorsque l'on détermine que toutes les parties caractéristiques ne sont pas placées dans une zone prédéterminée à l'intérieur du bord périphérique de la zone d'affichage.

7. Procédé d'affichage de graphique selon la revendication 5, dans lequel l'étape de réduction (S6, S21) du graphique affiché comprend les opérations suivantes déterminer (V22) si, parmi les parties caractéristiques du système de coordonnées et du graphique, toutes les parties caractéristiques sont placées dans une zone prédéterminée à l'intérieur du bord périphérique de la zone d'affichage;
(i) ne pas réduire le graphique affiché avec l'opération de pincement vers l'intérieur effectuée par l'utilisateur sur le panneau tactile, lorsque l'on détermine que toutes les parties caractéristiques sont placées dans une zone prédéterminée à l'intérieur du bord périphérique de la zone d'affichage; et
(ii) réduire (V14 - V19) le graphique affiché avec l'opération de pincement vers l'intérieur effectuée par l'utilisateur sur le panneau tactile, lorsque l'on détermine que toutes les parties caractéristiques ne sont pas placées dans une zone prédéterminée à l'intérieur du bord périphérique de la zone d'affichage.

8. Procédé d'affichage de graphique selon la revendication 1, dans lequel
le dispositif d'affichage (21) comprend un panneau tactile (221) intégré à un affichage (21);
dans l'étape d'affichage, une vitesse de défilement est définie en fonction d'une vitesse d'une opération de balayage effectuée par l'utilisateur sur le panneau tactile (221); et
lorsque la vitesse de défilement est supérieure à une vitesse de défilement prédéterminée, le défilement du graphe affiché ne s'arrête pas, même lorsque la quantité de mouvement calculée est atteinte.

9. Support de stockage sur lequel est stocké un programme d'affichage de graphique pour un ordinateur comprenant un dispositif d'affichage, le programme d'affichage graphique conduisant l'ordinateur à exécuter le procédé d'affichage de graphique selon l'une quelconque des revendications 1 à 8.

10. Appareil d'affichage de graphique, comprenant:
un dispositif d'affichage (21); et
une unité de commande (25) conçue pour exécuter le procédé d'affichage de graphique selon l'une quelconque des revendications 1 à 8.
